# FASCICULE DE BREVET EUROPEEN

(11) **EP 3 659 201 B1**
(45) Date de publication et mention de la délivrance du brevet: **15.11.2023**
(21) Numéro de dépôt: 18753074.6
(22) Date de dépôt: 25.07.2018
(51) Int. Cl.: H01M 10/052, H01M 10/0565, H01M 4/38, H01M 4/136, H01M 50/414, H01M 50/449, H01M 4/02

(54) **CELLULE D'ACCUMULATEUR LITHIUM-SOUFRE COMPRENANT UN SEPARATEUR SPECIFIQUE**
LITHIUM-SCHWEFEL-BATTERIEZELLE MIT EINEM SPEZIFISCHEN SEPARATOR
LITHIUM-SULPHUR BATTERY CELL COMPRISING A SPECIFIC SEPARATOR

(30) Priorité: 25.07.2017 FR 1757058
(43) Date de publication de la demande: 03.06.2020
(73) Titulaire: Centre National de la Recherche Scientifique, 75016 Paris (FR); Commissariat à l'Energie Atomique et aux Energies Alternatives, 75015 Paris (FR); Université Grenoble Alpes, 38400 Saint-Martin-d'Hères (FR)
(72) Inventeur: ALLOIN, Fannie, 38220 Vizille (FR); BARCHASZ, Céline, 38600 Fontaine (FR); VINCI, Valentin, 38400 Saint Martin D'Heres (FR); IOJOIU, Cristina, 38210 Vourey (FR); LEPRETRE, Jean-Claude, 38340 Voreppe (FR)
(74) Mandataire: Lavoix
(86) Numéro de dépôt international: PCT/EP2018/070128
(87) Numéro de publication internationale: WO 2019/020671

(56) Documents cités:
- KR-A- 20160 088 626
- US-A1- 2017 033 400
- US-A1- 2017 117 547

## Description

### DOMAINE TECHNIQUE

La présente invention a trait à une cellule d'accumulateur lithium-soufre comprenant un séparateur spécifique permettant de supprimer la diffusion des polysulfures de lithium formés en cours de fonctionnement de l'accumulateur.

Le domaine général de l'invention peut ainsi être défini comme celui des dispositifs de stockage d'énergie, en particulier celui des accumulateurs électrochimiques au lithium et, encore plus particulièrement, des accumulateurs électrochimiques lithium-soufre.

### ÉTAT DE LA TECHNIQUE ANTÉRIEURE

Les dispositifs de stockage d'énergie sont classiquement des accumulateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydo-réduction, moyennant quoi il y a production d'électrons à l'origine du courant électrique et productions d'ions qui vont circuler d'une électrode à l'autre par le biais d'un électrolyte.

Des accumulateurs souscrivant à ce principe actuellement les plus usités sont les suivants :
*les accumulateurs Ni-MH utilisant de l'hydrure métallique et de l'oxyhydroxyde de nickel comme matériaux d'électrode ;
*les accumulateurs Ni-Cd utilisant du cadmium et de l'oxyhydroxyde de nickel comme matériaux d'électrode ;
*les accumulateurs Acide-Plomb utilisant du plomb et de l'oxyde de plomb PbO₂ comme matériaux d'électrode ; et
*les accumulateurs au lithium, tels que les accumulateurs lithium-ion, utilisant classiquement, en tout ou partie, des matériaux lithiés comme matériaux d'électrode.

Du fait que le lithium est un élément solide particulièrement léger et présente un potentiel électrochimique particulièrement bas, les accumulateurs au lithium ont détrôné largement les autres accumulateurs mentionnés ci-dessus du fait de l'amélioration continue des performances des accumulateurs Li-ion en termes de densité d'énergie. En effet, les accumulateurs lithium-ion permettent d'obtenir des densités d'énergie massique et volumique (pouvant atteindre aujourd'hui près de 300 Wh.kg⁻¹) nettement supérieures à celles des accumulateurs Ni-MH et Ni-Cd (pouvant aller de 50 et 100 Wh.kg⁻¹) et Acide-plomb (pouvant aller de 30 à 35 Wh.kg⁻¹). Qui plus est, les accumulateurs Li-ion peuvent présenter une tension nominale de cellule supérieure à celle des autres accumulateurs (par exemple, une tension nominale de l'ordre de 3,6 V pour une cellule mettant en oeuvre comme matériaux d'électrode le couple LiCoO₂/graphite contre une tension nominale de l'ordre de 1,5 V pour les autres accumulateurs susmentionnés). Ces systèmes présentent également une faible autodécharge et une durée de vie élevée (allant de 500 à 1000 cycles, par exemple).

De par leurs propriétés intrinsèques, les accumulateurs Li-ion s'avèrent donc particulièrement intéressants pour les domaines où l'autonomie est un critère primordial, tel que cela est le cas des domaines de l'informatique, de la vidéo, de la téléphonie, des transports tels que les véhicules électriques, les véhicules hybrides, ou encore des domaines médicaux, spatiaux, de la microélectronique. Toutefois, la technologie des accumulateurs lithium-ion voit aujourd'hui ses performances plafonner et ses perspectives d'amélioration limitées.

Actuellement, une nouvelle technologie d'accumulateur à base de lithium se profile comme une alternative prometteuse, cette technologie étant la technologie lithium-soufre, dans laquelle l'électrode positive comprend, comme matériau actif, du soufre élémentaire ou un dérivé du soufre, tel que du sulfure de lithium ou un polysulfure de lithium.

L'utilisation du soufre, comme matériau actif, d'une électrode positive est particulièrement attractive, car le soufre présente une capacité spécifique théorique très élevée pouvant être jusqu'à plus de 10 fois supérieure à celle obtenue pour des matériaux conventionnels d'électrode positive (de l'ordre de 1675 mAh.g⁻¹ au lieu de 140 mAh.g⁻¹ pour LiCoO₂). Qui plus est, le soufre est présent, de manière abondante, sur la planète et se caractérise de ce fait par des coûts faibles. Enfin, il est peu toxique. Toutes ces qualités contribuent à le rendre particulièrement attractif en vue d'une mise en place à grande échelle, notamment pour les véhicules électriques, ce d'autant plus que les accumulateurs lithium/soufre peuvent permettre d'atteindre des densités d'énergie massique pouvant aller de 300 à 600 Wh.g⁻¹.

D'un point de vue fonctionnel, la réaction à l'origine de la production de courant (c'est-à-dire lorsque l'accumulateur est en mode de décharge) met en jeu une réaction d'oxydation du lithium à l'électrode négative qui produit des électrons, qui vont alimenter le circuit extérieur auquel sont reliées les électrodes positive et négative, et une réaction de réduction du soufre à l'électrode positive.

Ainsi, de manière explicite, en processus de décharge, la réaction globale est la suivante :

S₈ + 16Li → 8Li₂S

qui est la somme de la réaction de réduction du soufre à l'électrode positive (S₈ + 16e⁻ → 8S²⁻) et de la réaction d'oxydation du lithium à l'électrode négative (Li → Li⁺₊ e⁻).

Il est entendu que les réactions électrochimiques inverses se produisent lors du processus de charge.

Comme il ressort de l'équation ci-dessus, la réaction implique un échange de 16 électrons, ce qui justifie la capacité spécifique élevée du soufre (1675 mAh.g⁻¹).

D'un point de vue mécanistique, et sans être lié par la théorie, à l'état initial (c'est-à-dire lorsque l'accumulateur est à l'état de charge complet), le matériau actif, qui est du soufre élémentaire, est présent à l'état solide dans l'électrode positive. Au cours de la réduction du soufre, c'est-à-dire au cours de la décharge, les molécules cycliques de soufre sont réduites et forment des polysulfures de lithium, de formule générale Li₂Sₙ, avec n pouvant aller de 1 à 8. Puisque la molécule de départ est S₈, les premiers composés formés sont les polysulfures de lithium à chaînes longues, tels que Li₂S₈ ou Li₂S₆. Ces polysulfures de lithium étant solubles dans les électrolytes organiques, la première étape de décharge consiste donc en la solubilisation du matériau actif dans l'électrolyte et la production de polysulfures de lithium à chaînes longues en solution. Puis, au fur et à mesure que la réduction du soufre se poursuit, la longueur de chaîne des polysulfures est graduellement réduite et des composés tels que Li₂S₅, Li₂S₄ ou encore Li₂S₂ sont formés en solution. Enfin, le produit final de réduction est le sulfure de lithium (Li₂S), qui, lui, est insoluble dans les électrolytes organiques. Ainsi, la dernière étape du mécanisme de réduction du soufre consiste en la précipitation du matériau actif soufré.

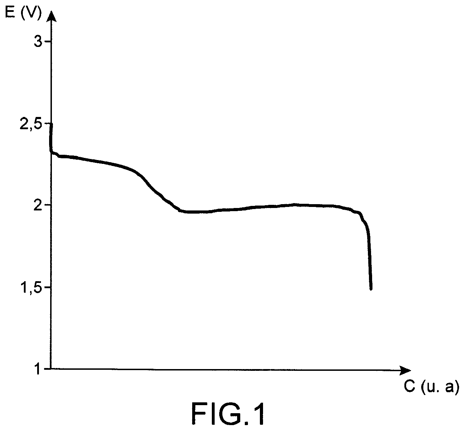

Ce mécanisme peut être corrélé au profil de décharge illustré sur la figure 1, qui représente un graphique illustrant l'évolution du potentiel E (en V) en fonction de la capacité C (en u.a).

En effet, dans ce profil, le premier plateau peut être attribué à la formation des chaînes longues de polysulfures de lithium, alors que le second plateau correspond à la réduction de la taille des chaînes soufrées, jusqu'à passivation de l'électrode positive.

Toutefois, les accumulateurs lithium-soufre présentent un certain nombre d'inconvénients.

Comme mentionné ci-dessus en support de la figure 1 et explicité également dans J. Power Sources 9 (1983) 281-287, le mécanisme de décharge d'un accumulateur lithium-soufre passe, par une étape de dissolution du matériau actif de l'électrode positive dans les électrolytes liquides utilisés. Cette étape de dissolution entraîne la mise en contact du matériau actif soufré de l'électrode positive avec le matériau actif de l'électrode négative, qui est classiquement du lithium métallique. Du fait d'un contact direct entre les matériaux actifs, il est facile d'imaginer que le système souffre alors d'une autodécharge importante, en circuit ouvert (sans passage du courant, par simple dissolution du soufre dans l'électrolyte) et en cyclage (par dissolution du soufre et formation de polysulfures de lithium). En effet, au lieu de réagir de manière électrochimique aux électrodes respectives, les matériaux actifs, positif et négatif, réagissent chimiquement à l'interface électrolyte (catholyte)/lithium métallique. Ce phénomène est accentué par le caractère très réducteur du lithium métallique.

En parallèle de ce phénomène d'autodécharge, il peut se produire une chute de la capacité au cours des cycles de l'accumulateur lithium-soufre par perte du matériau actif soufré au niveau de l'électrode négative, comme décrit dans Russian J.Electrochem. Soc., 151, 2004, A1969-A1976. En effet, le lithium métal et les polysulfures de lithium (tout comme le soufre élémentaire) réagissent selon les réactions chimiques suivantes:

2 Li + S₈ → Li₂S₈

n S₈ + 16 Li→ 8 Li₂Sₙ

Li₂Sₙ + (2n-2) Li → nLi₂S

16 Li + S₈ → 8 Li₂S

Ainsi, le soufre élémentaire et les polysulfures de lithium (chaîne longue ou intermédiaire) peuvent être piégés de manière irréversible à l'électrode négative de lithium par précipitation à la surface de l'électrode négative voire par piégeage de ceux-ci dans le film de passivation formé à la surface de l'électrode négative, lequel film résulte de la réaction de l'électrode négative avec l'électrolyte organique. De ce fait, les capacités pratiques obtenues sont généralement très en deçà de la capacité théorique, ces capacités pratiques allant de l'ordre de 300 à 100 mAh.g⁻¹ de soufre (contre une capacité théorique de 1675 mAh.g⁻¹). Un autre inconvénient dérive également de cette dissolution du matériau actif soufré dans l'électrolyte. Comme évoqué déjà ci-dessus, un mécanisme de navette redox peut se mettre en place en processus de charge. En effet, au cours de celui-ci, lorsque le matériau actif est oxydé à l'électrode positive, les polysulfures à chaînes courtes sont consommés et convertis en polysulfures à chaînes longues. Ces espèces solubles sont susceptibles de diffuser au travers de l'électrolyte et de rejoindre l'électrode négative. Toujours très réductrice, cette dernière engendre donc une réduction de ces polysulfures de lithium à chaînes longues et de nouveaux polysulfures à chaînes courtes
sont donc produits. Ces derniers diffusent de nouveau à l'électrode positive, où ils peuvent être réoxydés en polysulfures à chaînes longues. Ainsi de suite, les polysulfures peuvent être alternativement oxydés d'un côté et réduits de l'autre en raison de la dissolution du matériau actif soufré. Ce phénomène, plus connu sous le nom de mécanisme de navette redox se produit en charge et entraîne une chute importante de l'efficacité coulombique, puisqu'une partie du courant utilisé pour la charge est inutile pour la charge concrète du système.

Aussi, la diffusion des polysulfures de lithium n'est pas souhaitable et la diffusion de ceux-ci de l'électrode positive vers l'électrode négative *via* l'électrolyte doit être minimisée voire stoppée de même que le piégeage des matériaux actifs soufrés par l'électrode négative.

Pour ce faire, il a été proposé, dans l'art antérieur, de protéger l'électrode négative en lithium métallique par un dépôt, à sa surface, d'un ou plusieurs matériaux, par exemple, des matériaux inorganiques, tels que du Li₃N, du LiPON ou des céramiques conductrices des ions. Ce dépôt protecteur permet d'assurer une réelle séparation physique entre l'électrode négative et l'électrolyte avec toutefois l'inconvénient de la fragilité de ce type de dépôt notamment après un certain nombre de cyclages.

US 2017/033400 décrit une cellule d'accumulateur lithium-soufre comprenant une électrode négative en lithium métallique, une électrode positive et un séparateur comprenant deux polymères.

KR 20160088626 décrit un matériau de cathode avec une couche de PAH (polyalkylamine hydrochloride) et PS (polystyrène sulfonate sodium salt).US 2017/117547 décrit une cellule d'accumulateur lithium-soufre comprenant une cathode comprenant un matériau actif à base de soufre et au moins un sulfure de métal de transition et/ou du groupe III, IV et/ou V.

Au vu de ce qui précède, les inventeurs se sont fixé pour but de proposer un nouveau type de cellule de batterie lithium-soufre qui permet de diminuer substantiellement voire d'éliminer la diffusion des polysulfures de lithium vers l'électrode négative, moyennant quoi la cellule résultante présente une autodécharge et une chute de capacité en cyclage moindres et une augmentation de l'efficacité coulombique.

### EXPOSÉ DE L'INVENTION

Pour ce faire, les Inventeurs ont découvert qu'en jouant sur la nature du séparateur disposé entre l'électrode négative et l'électrode positive, il est possible d'accéder à des cellules d'accumulateur lithium-soufre présentant les propriétés mentionnées ci-dessus.

Ainsi, l'invention a trait à une cellule d'accumulateur lithium-soufre comprenant une électrode négative en lithium métallique, une électrode positive et un séparateur imprégné d'un électrolyte comprenant un sel de lithium, ledit séparateur étant disposé entre l'électrode négative et l'électrode positive, caractérisée en ce que le séparateur comprend, en outre, au moins un polymère porteur de groupes cationiques, tel que les groupes cationiques sont situés dans le ou les motifs de réticulation et tel que le polymère porteur de groupes cationiques est un polymère réticulé comportant au moins deux chaînes liées entre elles par au moins un motif de réticulation.

Avec un tel séparateur, les groupes cationiques contenus dans le polymère mentionné ci-dessus permettent de minimiser voire de supprimer la diffusion des polysulfures de lithium dissous dans l'électrolyte grâce à une interaction ionique entre les anions et radicaux anions polysulfures et lesdits groupes cationiques, moyennant quoi lesdits polysulfures se trouvent ainsi piégés dans le séparateur et ne peuvent ainsi pas être véhiculés en direction de l'électrode négative. Ce piégeage par interaction ionique permet de limiter voire d'éviter le phénomène de navette redox occasionnant ainsi une amélioration notable du rendement faradique de l'accumulateur lithium-soufre.

Avant d'entrer plus en avant dans la description, on précise les définitions suivantes.

Par électrode négative, on entend, classiquement, dans ce qui précède et ce qui suit, l'électrode qui fait office d'anode, quand l'accumulateur débite du courant (c'est-à-dire lorsqu'il est en processus de décharge) et qui fait office de cathode, lorsque l'accumulateur est en processus de charge.

Par électrode positive, on entend, classiquement, dans ce qui précède et ce qui suit, l'électrode qui fait office de cathode, quand l'accumulateur débite du courant (c'est-à-dire lorsqu'il est en processus de décharge) et qui fait office d'anode lorsque l'accumulateur est en processus de charge.

Comme mentionné ci-dessus, le séparateur comprend au moins un polymère porteur de groupes cationiques, le polymère pouvant être :
- un polymère linéaire, c'est-à-dire un polymère comprenant une ou plusieurs unités répétitives (résultant de la polymérisation d'un ou plusieurs monomères), dont l'enchaînement forme une chaîne linéaire, la ou lesdites unités répétitives comprenant ainsi un ou plusieurs groupes cationiques ;
- un polymère ramifié, c'est-à-dire un polymère comprenant une chaîne principale comprenant une ou plusieurs unités répétitives (résultant de la polymérisation d'un ou plusieurs monomères), au moins un point de cette chaîne principale étant fixé à une chaîne latérale comprenant une ou plusieurs unités répétitives (résultant de la polymérisation d'un ou plusieurs monomères), la ou lesdites chaînes latérales pouvant être qualifiées de greffons, lorsque la composition de celle(s)-ci diffère de celle de la chaîne principale, lesdits groupes cationiques pouvant être situés dans une ou plusieurs des unités répétitives de la chaîne principale et/ou dans une ou plusieurs des unités répétitives de la ou les chaînes latérales ;
- un polymère réticulé, c'est-à-dire un polymère comprenant au moins deux chaînes (une ou plusieurs chaînes linéaires répondant à la définition ci-dessus d'un polymère linéaire et/ou une ou plusieurs chaînes ramifiées répondant à la définition ci-dessus d'un polymère ramifié) liées entre elles par au moins un motif formant un pont (dit également motif ou noeud de réticulation), lesdits groupes cationiques pouvant être situés dans l'une au moins des chaînes et/ou dans ledit motif formant le pont.

Le polymère porteur de groupes cationiques est un polymère réticulé comportant au moins deux chaînes liées entre elles par au moins un motif de réticulation avec, de préférence, les groupes cationiques étant situés dans le ou les motifs de réticulation.

Le polymère porteur de groupes cationiques peut être un polymère ou copolymère appartenant à la catégorie des polyoxyalkylènes (et plus spécifiquement, des polyoxyéthylènes, des polyoxypropylènes, des copolymères comprenant des motifs oxyde d'éthylène et des motifs issus de la polymérisation de l'éther allylglycidique, des polymères issus de la polymérisation de l'épichlorhydrine), des polyéthers (tels que des polytétrahydrofuranes), des polydioxolanes, des polyoxétanes ou des polycarbonates et, plus spécifiquement, un polymère réticulé appartenant à l'une de ces catégories, ce qui signifie en d'autres termes que le polymère porteur de groupes cationiques comprend au moins deux chaînes appartenant à la catégorie des polyoxyalkylènes (et plus spécifiquement, des polyoxyéthylènes, des polyoxypropylènes), des polyéthers (tels que des polytétrahydrofuranes), des polydioxolanes, des polyoxétanes, des polycarbonates, lesdites chaînes étant liées entre elles par au moins un motif de réticulation, les groupes cationiques étant situées, par exemple, dans le ou les motifs de réticulation.

Avantageusement, le polymère porteur de groupes cationiques est un polymère appartenant à la catégorie des polyoxyalkylènes (tels que des polyoxyéthylènes, des polyoxypropylènes) et plus spécifiquement, à la catégorie de polymères polyoxyalkylènes réticulés tels que définis ci-dessus (à savoir, un polymère porteur de groupes cationiques comprenant au moins deux chaînes appartenant à la catégorie des polyoxyalkylènes (tels que des polyoxyéthylènes, des polyoxypropylènes), lesdites chaînes étant liées entre elles par au moins un motif de réticulation, les groupes cationiques étant situées, de préférence, dans les motifs de réticulation).

Plus particulièrement, le polymère porteur de groupes cationiques est un polymère réticulé appartenant à la catégorie des polyoxyalkylènes, tel qu'un polymère comprenant au moins une unité répétitive répondant à la formule (I) suivante : 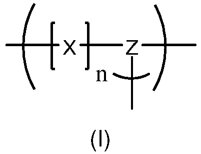 dans laquelle :
- X correspond à un groupe oxyde d'alkylène, par exemple, un groupe oxyde d'éthylène ;
- n correspond au nombre de répétition du groupe oxyde d'alkylène, n pouvant aller de 2 à 80, par exemple, égal à 9 ;
- Z est un groupe alkylène lié, de manière covalente, à un motif de réticulation (la parenthèse entrecoupant la liaison partant de Z indiquant l'endroit par lequel le groupe Z est lié au motif de réticulation).

Un exemple particulier d'unité répétitive tombant sous le coup de la définition des unités répétitives de formule (I) est une unité répétitive de formule (II) suivante :

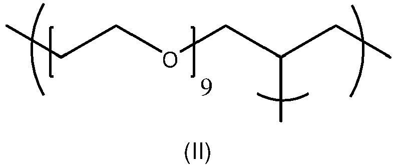

Les groupes cationiques sont, comme leur nom l'indique, des groupes portant une charge positive et peuvent être notamment choisis parmi les groupes ammonium, les groupes phosphonium ou les groupes sulfonium et, de préférence, les groupes ammonium.

Lorsque les groupes cationiques appartiennent à un motif de réticulation, ce dernier peut répondre à la formule (III) suivante : 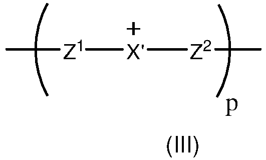 dans laquelle :
- Z¹ et Z² représentent, indépendamment l'un de l'autre, un groupe alkylène ;
- X'⁺ représente un groupe comprenant un groupe cationique, tel qu'un groupe ammonium, un groupe phosphonium ou un groupe sulfonium ;
   Z¹ étant lié, par une de ses extrémités, à une unité répétitive d'une chaîne polymérique tandis que Z² est lié, par une de ses extrémités, à une unité répétitive d'une autre chaîne polymérique ;
- p est un entier supérieur ou égal à 1.

Outre le motif susmentionné, le polymère peut comprendre également un motif similaire si ce n'est que le groupe Z² est un groupe libre (c'est-à-dire non lié, et plus spécifiquement non lié par une de ses extrémités, à une unité répétitive d'une autre chaîne polymérique).

Un exemple particulier de motif de réticulation tombant sous le coup de la définition des motifs de réticulation de formule (III) est un motif de réticulation de formule (IV) ci-dessus : 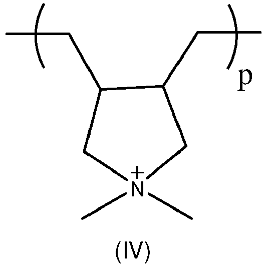 p étant un entier supérieur ou égal à 1, ce motif pouvant être issu de la du diallyldiméthylammonium (par exemple, le chlorure de diallyldiméthylammonium).

A titre d'exemple, un polymère réticulé porteur de groupes cationiques est un polymère appartenant à la catégorie des polyoxyalkylènes est un polymère comprenant un motif répétitif répondant à la formule (V) suivante : 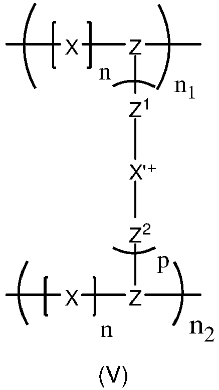 dans laquelle :
- X, Z, Z¹, Z², X'⁺, n et p sont tels que définis ci-dessus ;
- n₁ et n₂ correspondent au nombre de répétition du motif pris entre parenthèses.

Un exemple particulier de polymère tombant sous le coup de la définition des polymères de formule (V) ci-dessus est un polymère répondant à la formule (VI) suivante : 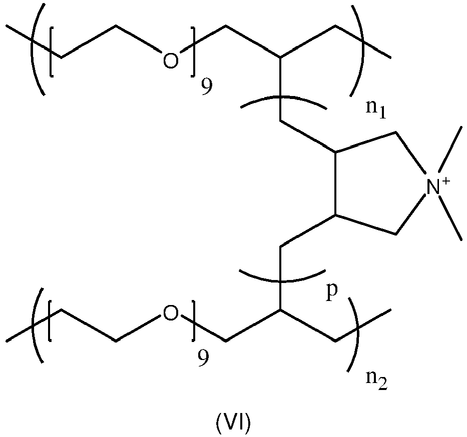 avec n₁, n₂ et p correspondant au nombre de répétition du motif pris entre parenthèses.

Conformément au principe de l'électroneutralité, il s'entend que les groupes cationiques sont neutralisés par des anions fluorés (tels que PF₆⁻, BF₄⁻, CF₃SO₃⁻) et, de préférence, des anions imidures, tels que des anions bis(fluorosulfonyl)imidure ou bis(trifluorométhylsulfonyl)imidure répondant à la formule (VII) suivante :

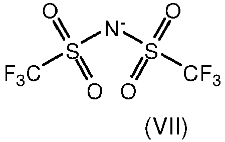

Le polymère porteur de groupes cationiques peut se retrouver sous forme d'une couche à la surface d'au moins une des faces du séparateur, par exemple, la face du séparateur destinée à être en contact avec l'électrode négative ou la face du séparateur destinée à être en contact avec l'électrode positive.

Le séparateur peut se présenter sous forme d'une membrane, par exemple, en un matériau poreux ou dense, tel qu'un matériau polymérique (par exemple, une polyoléfine poreuse, tel que du polypropylène, du polyéthylène ou encore un polymère fluoré dense ou poreux, tel que du polyfluorure de vinylidène) apte à accueillir dans sa porosité l'électrolyte liquide ou à gonfler dans l'électrolyte liquide, ladite membrane étant recouverte sur l'un au moins de ses faces destinées à être en contact avec l'électrode négative ou l'électrode positive par une couche d'au moins un polymère porteur de groupes cationiques tel que défini ci-dessus.

A titre d'exemple, lorsque le polymère répond à la formule (VI) ci-dessus, il peut être préparé par un procédé comprenant les étapes suivantes :
- une étape de préparation d'un polymère précurseur comportant un groupe pendant éthylénique, ledit polymère précurseur répondant à la formule (VIII) suivante : 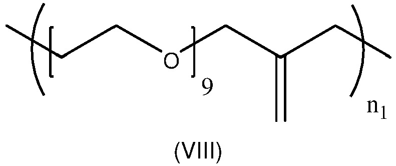
   n₁ correspondant au nombre de répétition du motif de répétition pris entre parenthèses,
   ce polymère pouvant être obtenu par polycondensation d'un polyoxyde d'éthylène, par exemple, de masse molaire 400 g/mol et du 3-chloro-2-chlorométhylpropène ;
- une étape de préparation d'un mélange comprenant le polymère précurseur de formule (VIII) et d'un agent de réticulation de formule (IX) suivante : 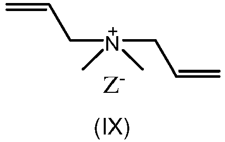
   dans laquelle Z⁻ est un anion, tel qu'un anion imidure et plus particulièrement encore, un anion trifluorométhylsulfonylimidure
   et un amorceur de polymérisation ;
- une étape d'imprégnation par ledit mélange d'au moins une face d'un séparateur ;
- une étape de réticulation thermique ou par UV dudit polymère précurseur, la réticulation ayant lieu directement sur le séparateur.

Il s'entend que la fonctionnalité (c'est-à-dire le nombre de groupes cationiques introduits) du polymère comprenant des groupes cationiques peut être modulée en jouant sur les paramètres suivants :
- en jouant sur le nombre de motifs entre doubles liaisons du polymère précurseur et en introduisant une quantité de monomères permettant d'introduire un groupe cationique par double liaison ;
- en ne fonctionnalisant pas toutes les doubles liaisons du polymère précurseur par un groupe cationique (en jouant sur le rapport (groupe cationique/nombre de doubles liaisons) ;
- en introduisant plusieurs groupes cationiques par double liaison (par exemple en jouant sur le rapport (groupe cationique/nombre de doubles liaisons) ).

La modulation de la fonctionnalité du polymère permet de piéger plus ou moins des polysulfures dans la matrice polymère. Les polysulfures étant majoritairement des anions divalents, ils créent des ponts entre deux fonctions ammonium quaternaire greffées, ce qui va limiter leur diffusion.

A titre d'exemple, la fonctionnalité du polymère peut être modulée avec des concentrations allant de 4 moles à 0,3 mole de doubles liaisons par kg de polymère.

En outre, le séparateur est imprégné par un électrolyte comprenant un sel de lithium.

Plus spécifiquement, l'électrolyte peut être un électrolyte liquide comprenant au moins un solvant organique et au moins un sel de lithium.

Le ou les solvants organiques peuvent être, par exemple, un solvant comportant une ou plusieurs fonctions éther, nitrile, sulfone et/ou carbonate avec, par exemple, une chaîne carbonée pouvant comporter de 1 à 10 atomes de carbone.

A titre d'exemples de solvants comportant une fonction éther, on peut citer les solvants éthers, tels que le 1,3-dioxolane (symbolisé par l'abréviation DIOX), le tétrahydrofurane (symbolisé par l'abréviation THF), le 1,2-diméthoxyéthane (symbolisé par l'abréviation DME), ou un éther de formule générale CH₃O-[CH₂CH₂O]ₙ₋OCH₃ (n étant un entier allant de 1 et 10), tel que le diméthyléther de tétraéthylèneglycol (symbolisé par l'abréviation TEGDME) et les mélanges de ceux-ci.

A titre d'exemples de solvants comportant une fonction carbonate, on peut citer :
- des solvants carbonates cycliques, tel que le carbonate d'éthylène (symbolisé par l'abréviation EC), le carbonate de propylène (symbolisé par l'abréviation PC) ;
- des solvants carbonates linéaires, tels que le carbonate de diéthyle (symbolisé par l'abréviation DEC), le carbonate de diméthyle (symbolisé par l'abréviation DMC), le carbonate d'éthylméthyle (symbolisé par l'abréviation EMC).

De préférence, le solvant organique est un solvant éther ou un mélange de solvants éthers, tels qu'un mélange de diméthyléther de tétraéthylèneglycol et de 1,3-dioxolane.

Le sel de lithium peut être choisi dans le groupe constitué par LiPF₆, LiClO₄, LiBF₄, LiAsF₆, Lil, LiNO₃, LiOH, LiR_{f}SO₃ (avec R_{f} correspondant à un groupe perfluoroalkyle comprenant de 1 à 8 atomes de carbone), tel que LiCF₃SO₃, LiN(CF₃SO₂)₂ (appelé également bis[(trifluorométhyl)sulfonyl]imidure de lithium correspondant à l'abréviation LiTFSI), LiN(C₂F₅SO₂)₂ (appelé également bis[(perfluoroéthyl)sulfonyl]imidure de lithium correspondant à l'abréviation LiBETI), LiN(SO₂F)₂ (appelé également bis(fluorosulfonyl)imidure de lithium), LiCH₃SO₃, LiB(C₂O₄)₂ (appelé également bis(oxalato)borate de lithium ou LiBOB) et les mélanges de ceux-ci, la préférence portant sur un mélange LiTFSI/LiNO₃.

Le sel de lithium peut être présent, dans l'électrolyte, selon une concentration allant de 0,25 M à 2 M, par exemple, 1M.

L'électrode positive comprend, classiquement, un matériau actif soufré et éventuellement un additif conducteur de l'électricité et un liant organique.

Le matériau actif soufré peut être du soufre élémentaire (Ss) ou du disulfure de lithium (Li₂S), des composés comprenant au moins un groupe disulfure -S-S-, tels que des polysulfures de lithium de formule générale Li₂Sn (avec n allant de 2 à 8), des polysulfures organiques, des composés organosoufrés, le groupe disulfure pouvant être rompu lors du processus de décharge et reformé lors du processus de charge.

L'additif carboné inorganique conducteur de l'électricité peut être une poudre de noir de carbone, des nanotubes de carbone, des fibres de carbone ou des mélanges de ceux-ci.

Quant au liant organique, il peut être choisi parmi les liants polymériques suivants :
- des liants polymériques appartenant à la catégorie des polymères cellulosiques, tels que de la carboxyméthylcellulose (connu sous l'abréviation CMC), de la méthylcellulose (connu sous l'abréviation MC) ;
- des liants polymériques appartenant à la catégorie des polymères éthyléniques fluorés, tel que du polytétrafluoroéthylène (connu sous l'abréviation PTFE), le polyfluorure de vinylidène (connu sous l'abréviation PVDF) et ou des copolymères éthyléniques fluorés (tels que les copolymères de fluorure de vinylidène et d'hexafluoropropylène) ;
- des liants polymériques appartenant à la catégorie des polymères vinyliques, tels qu'un poly(alcool vinylique) (connu sous l'abréviation PVA) ; et
- des mélanges de ceux-ci.

L'électrode positive peut être déposée sur un collecteur de courant, qui peut être en un matériau métallique (composé d'un seul élément métallique ou d'un alliage d'un élément métallique avec un autre élément), tel que du cuivre, un alliage de cuivre, de l'aluminium, un alliage d'aluminium, du nickel, de l'inox, ledit collecteur de courant se présentant, par exemple, sous forme d'une plaque ou feuillard ou un non tissé de carbone.

A titre d'exemple, l'électrode positive peut comprendre du soufre élémentaire, un additif conducteur de l'électricité du type noir de carbone, nanotubes de carbone ou fibres de carbone, un liant organique, ladite électrode positive étant déposée sur un collecteur de courant du type feuillard en aluminium (par exemple, de 20 µm d'épaisseur).

Une cellule conforme à l'invention peut constituer un accumulateur lithium-soufre en tant que tel ou plusieurs cellules conformes à l'invention, par exemple, montées en série, peuvent constituer un accumulateur lithium-soufre en tant que tel.

Aussi l'invention a également trait à un accumulateur lithium-soufre comprenant au moins une cellule telle que définie ci-dessus.

D'autres caractéristiques et avantages de l'invention apparaîtront mieux à la lecture du complément de description qui suit, qui se rapporte à des exemples précis de mise en oeuvre de l'invention.

### BRÈVE DESCRIPTION DES FIGURES

La figure 1 est un graphique illustrant l'évolution du potentiel E (en V) en fonction de la capacité C (en u.a).

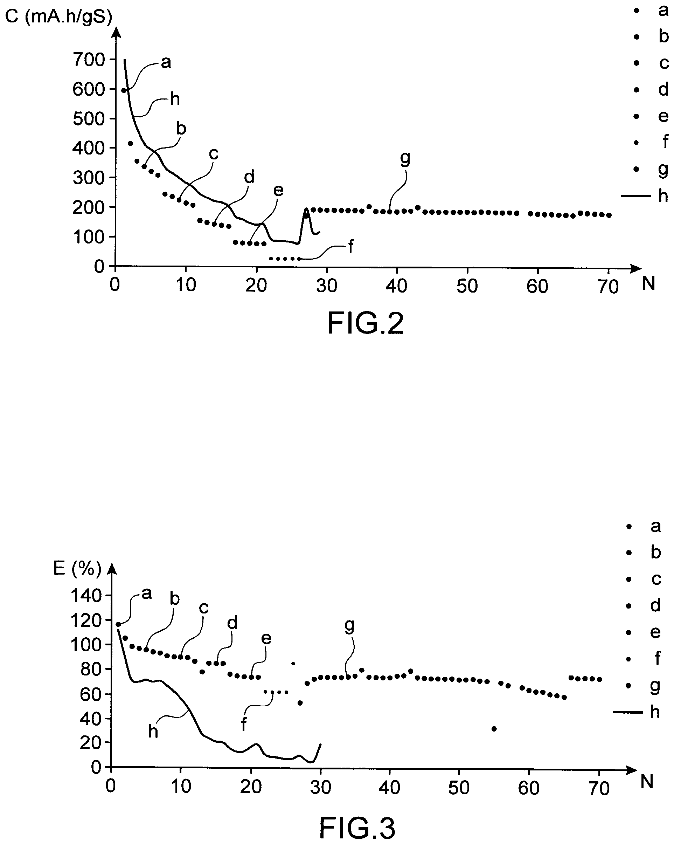

La figure 2 est un graphique illustrant l'évolution de la capacité de décharge C (en mA.h/gS) en fonction du nombre de cycles N à différents régimes de décharges pour une cellule conforme à l'invention (courbes a à g pour respectivement un régime D/100, D/50, D/20, D/10, D/5, D/2, D/20, D indiquant un régime de décharge et 100, 50, 20, 10, 5, 2 et 20 représentant le nombre d'heures de décharge) et une cellule non conforme à l'invention (courbe h).
La figure 3 est un graphique illustrant l'évolution de l'efficacité coulombique E (en %) en fonction du nombre de cycles N à différents régimes de décharge pour une cellule conforme à l'invention (courbes a à g pour respectivement un régime D/100, D/50, D/20, D/10, D/5, D/2, D/20, D indiquant un régime de décharge et 100, 50, 20, 10, 5, 2 et 20 représentant le nombre d'heures de décharge) et une cellule non conforme à l'invention (courbe h).

### EXPOSÉ DÉTAILLÉ DE MODES DE RÉALISATION PARTICULIERS

### EXEMPLE 1

Cet exemple illustre la préparation d'un séparateur poreux sur lequel est déposé un film d'un polymère réticulé comprenant des groupes cationiques ammonium, cette préparation comprenant les étapes suivantes :
a) une étape de préparation d'un mélange comprenant du trifluorosulfonylimidure de diallyldiméthylammonium ;
b) une étape de préparation d'un polycondensat comprenant des unités oxyde d'éthylène ;
c) une étape de préparation d'une solution comprenant le mélange de l'étape a) et le polycondensat de l'étape b) ;
d) une étape d'imprégnation d'un séparateur par la solution de l'étape c) suivie d'une réticulation de cette solution.

### a) Etape de préparation d'un mélange comprenant du (bis(trifluorométhvlsulfonyl)imide) de diallyldiméthylammonium

La préparation de ce mélange peut être schématisée par le schéma réactionnel suivant :

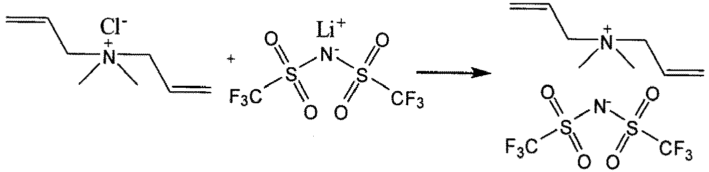

Le chlorure de lithium n'est pas représenté, car il est éliminé avec la phase aqueuse.

Pour ce faire, il est placé dans un réacteur les réactifs suivants :
- 12,6 g (0,1 mole) de chlorure de diallyldiméthylammonium (symbolisé ci-après par l'abréviation DADMAC) en solution dans de l'eau (65% molaire) soit 19,4 g de solution ;
- 57,6 g (0,2 mole) de (bis(trifluorométhylsulfonyl)imide)_de lithium (symbolisé ci-20 après par l'abréviation LiTFSI) ; et
- 400 mL d'eau déionisée.
Le mélange résultant est agité pendant 24 heures, à l'issue desquelles une huile insoluble blanchâtre est obtenue. L'huile est séparée de la phase aqueuse à l'aide d'une ampoule à décanter puis la phase aqueuse est lavée avec trois fois 15 mL de dichlorométhane. Les phases organiques (huile+3 phases organiques récupérées du lavage) sont réunies puis séchées sur du MgSO₄. Le dichlorométhane est évaporé sous vide à basse température. La pureté du produit obtenu est vérifiée par RMN et le taux d'ions chlorures résiduels est inférieur à 10⁻⁶ mol.L⁻¹ (vérifié par dosage potentiométrique).Le sel (bis(trifluorométhylsulfonyl)imide)_de diallyldiméthylammonium est conservé à 4°C pour assurer sa stabilité.

### b) Etape de préparation d'un polycondensat comprenant des unités oxyde d'éthylène

Cette étape illustre la préparation d'un polycondensat résultant de la polycondensation d'un polyoxyde d'éthylène de masse molaire 400 g.mol⁻¹ et du 3-chloro-2-chlorométhyl-1-propène selon le schéma réactionnel suivant :

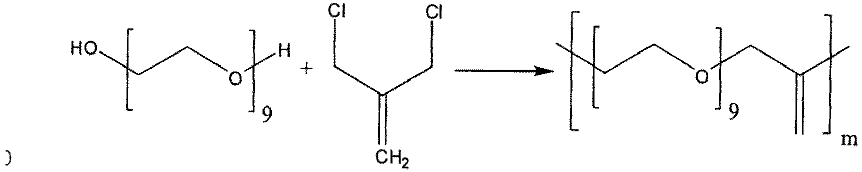

Dans un réacteur, un équivalent de polyoxyde d'éthylène de masse molaire 400 g.mol⁻¹ (POE₄₀₀) est placé sous agitation mécanique à 50°C. Cinq équivalents d'hydroxyde de potassium fraîchement broyé sont ajoutés, l'agitation étant maintenue jusqu'à homogénéisation du mélange, à savoir une heure. Un équivalent molaire de 3-chloro-2-chlorométhyl-1-propène est ajouté sous agitation, à 50°C. La réaction se poursuit pendant 24 heures. Après ajout d'eau, l'excès de KOH est neutralisé par une solution de HCl à 8% jusqu'à un pH de 7. Le mélange réactionnel est purifié par ultrafiltration (seuil de coupure : 1KDa). L'avancée de la purification est ensuite suivie par conductimétrie (conductivité ciblée inférieure à 50 g). La solution alors est lyophilisée pour obtenir le polymère sec. La pureté vérifiée par RMN est supérieure à 96 %.

### c) Etape de préparation d'une solution comprenant le mélange de l'étape a) et le polycondensat de l'étape b)

Pour ce faire, il est placé dans un flacon
- 144 mg de polycondensat préparé à l'étape b) ;
- 56 mg de sel préparé à l'étape a) ;
- 4 mg d'Irgacure 2959; et
- 500 mg d'acétonitrile.

Le mélange est agité pendant 24 h.

La solution est dégazée à 500 mbar pendant 5 minutes. Après dégazage, la solution est concentrée à hauteur d'environ 50% _{massique}.

### d) Etape d'imprégnation d'un séparateur par la solution de l'étape c) suivie d'une réticulation de cette solution

Un séparateur substrat du type Celgard^{®}2400 est immergé dans de l'acétonitrile pendant 1 heure. L'excès de solvant est retiré puis le séparateur est ensuite plongé dans la solution obtenue en c) pendant quelques heures. L'excès de liquide est retiré puis le séparateur est séché sur un support antiadhésif pendant 24 heures sous flux d'argon. L'échantillon est ensuite placé dans une chambre de réticulation en quartz sous argon et est illuminé 2 x 30 secondes. La puissance de rayonnement reçue par l'échantillon est d'environ 15 mW.cm⁻². La porosité de surface du séparateur est partiellement remplie par l'opération.

### EXEMPLE 2

Cet exemple illustre la préparation d'une cellule d'accumulateur lithium-soufre conforme à l'invention comprenant un séparateur tel que préparé à l'exemple 1 et d'une cellule d'accumulateur lithium-soufre non conforme à l'invention.

La cellule d'accumulateur lithium-soufre conforme à l'invention et se présentant sous forme d'une pile bouton (CR2032) est préparé par empilement des éléments suivants :
- une électrode positive comprenant 80% en masse de Ss, 10% en masse de PVDF et 10% en masse de SuperP^{®} sur un collecteur de courant en aluminium, cette électrode positive se présentant sous forme d'un disque de 16 mm de diamètre ;
- une électrode négative de lithium de 130 µm d'épaisseur, découpée au diamètre 16 mm et déposée sur un disque d'inox servant de collecteur de courant ;
- un séparateur préparé selon l'exemple 1 et un séparateur Viledon^{®}, chacun des séparateurs étant imbibé d'un électrolyte liquide à base du sel LiTFSI (1 mol.L⁻¹) en solution dans un mélange 50/50 en volume de TEGDME (tétraéthylène glycol diméthyléther) - DIOX (Dioxolane).

Les deux séparateurs sont superposés l'un sur l'autre, le séparateur préparé selon l'exemple 1 ayant une face en contact avec l'électrode négative (tandis que la face opposée est en contact avec le séparateur Viledon^{®}) et le séparateur Viledon^{®} ayant une face en contact avec l'électrode positive (tandis que la face opposée est en contact avec le séparateur préparé à l'exemple 1).

Quant à la cellule d'accumulateur lithium-soufre non conforme à l'invention, elle se présente également sous forme d'une pile bouton (CR2032) et est préparé par empilement des éléments suivants :
- une électrode positive, dont la préparation est explicitée ci-dessous ;
- une électrode négative de lithium de 130 µm d'épaisseur, découpée au diamètre 16 mm et déposée sur un disque d'inox servant de collecteur de courant ;
- un séparateur Celgard^{®} 2400 et un séparateur Viledon^{®}, chacun des séparateurs étant imbibé d'un électrolyte liquide à base du sel LiTFSI (1 mol.L⁻¹) en solution dans un mélange 50/50 en volume de TEGDME (tétraéthylène glycol diméthyléther) - DIOX (Dioxolane).

Les deux séparateurs sont superposés l'un sur l'autre, le séparateur Celgard^{®} 2400 ayant une face en contact avec l'électrode négative (tandis que la face opposée est en contact avec le séparateur Viledon^{®}) et le séparateur Viledon^{®} ayant une face en contact avec l'électrode positive (tandis que la face opposée est en contact avec le séparateur Celgard^{®} 2400).

L'électrode positive est préparée à partir d'une encre comprenant :
- un matériau actif, qui est du soufre élémentaire (Soufre élémentaire Refined, Aldrich) ;
- du noir de carbone (Super P^{®}, Timcal)
- un liant (difluorure de polyvinylidène ou PVdF, Solvay) mis en solution dans la N-méthylpyrrolidone (NMP).

Plus spécifiquement, l'encre est composée (en masse) de 80% de soufre, 10% de noir de carbone et 10% de liant. La quantité de NMP est ajustée pour atteindre la viscosité optimale permettant un dépôt facile du mélange. L'encre est déposée par enduction à l'aide d'une racle micrométrique sur un feuillard d'aluminium de 20 µm d'épaisseur. L'enduction est ensuite séchée à 55°C pendant 24h sous air puis le feuillard ainsi enduit et séché est découpé sous forme d'une pastille de diamètre 14 mm pour former l'électrode positive.

Les cellules obtenues sont soumises à des tests, pour en déterminer les performances électrochimiques en termes de capacités de décharge et d'efficacité coulombique.

Il est procédé notamment :
- comme illustré sur la figure 2, à la détermination de l'évolution de la capacité de décharge C (en mA.h.gₛ⁻¹) en fonction du nombre de cycles à différents régimes de décharges pour la cellule conforme à l'invention (courbes a à g pour respectivement un régime D/100, D/50, D/20, D/10, D/5, D/2, D/20) et la cellule non conforme à l'invention (courbe h) ; et
- comme illustré sur la figure 3, à la détermination de l'évolution de l'efficacité coulombique E (en %) en fonction du nombre de cycles à différents régimes de décharge pour la cellule conforme à l'invention (courbes a à g pour respectivement un régime D/100, D/50, D/20, D/10, D/5, D/2, D/20) et la cellule non conforme à l'invention (courbe h).

Ces figures mettent en évidence une efficacité coulombique fortement améliorée grâce à l'introduction du séparateur ainsi modifié, pour des performances en capacité de stockage peu altérées. Plusieurs batteries ont été assemblées et testées afin de s'assurer de la reproductibilité des résultats.

## Revendications

1. Cellule d'accumulateur lithium-soufre comprenant une électrode négative en lithium métallique, une électrode positive et un séparateur imprégné d'un électrolyte comprenant un sel de lithium, ledit séparateur étant disposé entre l'électrode négative et l'électrode positive,
**caractérisée en ce que** le séparateur comprend, en outre, au moins un polymère porteur de groupes cationiques, tel que les groupes cationiques sont situés dans le ou les motifs de réticulation, et tel que le polymère porteur de groupes cationiques est un polymère réticulé comportant au moins deux chaînes liées entre elles par au moins un motif de réticulation.

2. Cellule selon la revendication 1, dans laquelle le polymère porteur de groupes cationiques est un polymère ou copolymère appartenant à la catégorie des polyoxyalkylènes, des polyéthers, des polydioxolanes, des polyoxétanes ou des polycarbonates.

3. Cellule selon l'une quelconque des revendications précédentes, dans laquelle le polymère porteur de groupes cationiques est un polymère appartenant à la catégorie des polyoxyalkylènes.

4. Cellule selon l'une quelconque des revendications précédentes, dans laquelle le polymère porteur de groupes cationiques est un polymère réticulé appartenant à la catégorie des polyoxyalkylènes comprenant au moins une unité répétitive répondant à la formule (I) suivante : 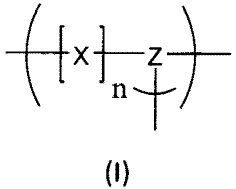 dans laquelle :
- X correspond à un groupe oxyde d'alkylène ;
- n correspond au nombre de répétition du groupe oxyde d'alkylène, n pouvant aller de 2 à 80;
- Z est un groupe alkylène lié, de manière covalente, à un motif de réticulation.

5. Cellule selon l'une quelconque des revendications précédentes, dans laquelle le polymère porteur de groupes cationiques est un polymère réticulé appartenant à la catégorie des polyoxyalkylènes comprenant au moins une unité répétitive répondant à la formule (II) suivante

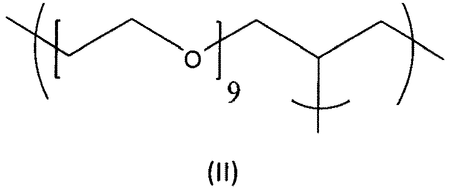

6. Cellule selon l'une quelconque des revendications précédentes, dans laquelle les groupes cationiques sont choisis parmi les groupes ammonium, les groupes phosphonium ou les groupes sulfonium.

7. Cellule selon l'une quelconque des revendications précédentes, dans laquelle, lorsque les groupes cationiques appartiennent à un motif de réticulation, le motif de réticulation répond à la formule (III) suivante : 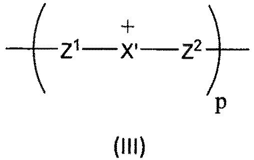 Dans laquelle
- Z¹ et Z² représentent, indépendamment l'un de l'autre, un groupe alkylène ;
- X'⁺ représente un groupe cationique ;
Z¹ étant lié, par une de ses extrémités, à une unité répétitive d'une chaîne polymérique, tandis que Z² est lié, par une de ses extrémités, à une unité répétitive d'une autre chaîne polymérique ;
- p est un entier supérieur ou égal à 1.

8. Cellule selon la revendication 8, dans laquelle le motif de réticulation répond à la formule (IV) suivante 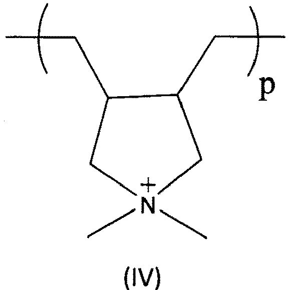 dans laquelle p est tel que défini à la revendication 8.

9. Cellule selon l'une quelconque des revendications précédentes, dans laquelle le polymère porteur de groupes cationiques est un polymère réticulé porteur de groupes cationiques polymère appartenant à la catégorie des polyoxyalkylènes répondant à la formule (V) suivante 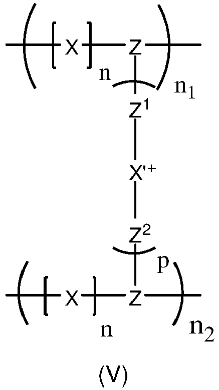 dans laquelle :
- X, Z, Z¹, Z², X'⁺, n et p sont tels que définis aux revendications 5 et 8;
- n₁ et n_{z} correspondent au nombre de répétition du motif pris entre parenthèses.

10. Cellule selon l'une quelconque des revendications précédentes, dans laquelle le polymère porteur de groupes cationiques est un polymère réticulé porteur de groupes cationiques appartenant à la catégorie des polyoxyalkylènes répondant à la formule (VI) suivante : 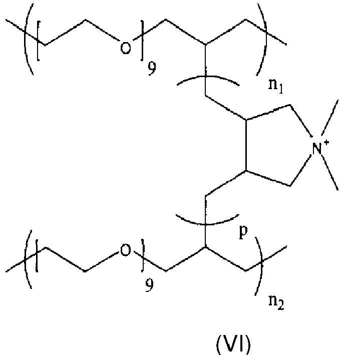 dans laquelle n₁, n₂ et p sont tels que définis à la revendication 10.

11. Cellule selon l'une quelconque des revendications précédentes, dans laquelle les groupes cationiques sont neutralisés par des anions imidures.

12. . Cellule selon l'une quelconque des revendications précédentes, dans laquelle le polymère porteur de groupes cationiques se retrouve sous forme d'une couche à la surface d'au moins une des faces du séparateur.

13. Cellule selon l'une quelconque des revendications précédentes, dans laquelle l'électrolyte est un électrolyte liquide comprenant au moins un solvant organique et au moins un sel de lithium.

14. Cellule selon l'une quelconque des revendications précédentes, dans laquelle l'électrode positive comprend un matériau actif soufré.

15. Accumulateur lithium-soufre comprenant au moins une cellule telle que définie selon l'une quelconque des revendications 1 à 14 précédentes.

## Patentansprüche

1. Lithium-Schwefel-Batteriezelle, umfassend eine negative Elektrode aus metallischem Lithium, eine positive Elektrode und einen Separator, der mit einem Elektrolyten imprägniert ist, der ein Lithiumsalz umfasst, wobei der Separator zwischen der negativen Elektrode und der positiven Elektrode angeordnet ist,
**dadurch gekennzeichnet, dass** der Separator ferner mindestens ein kationische Gruppen tragendes Polymer derart umfasst, dass sich die kationischen Gruppen in der oder in den Vernetzungseinheiten befinden, und derart, dass das kationische Gruppen tragende Polymer ein vernetztes Polymer ist, das mindestens zwei Ketten aufweist, die durch mindestens eine Vernetzungseinheit miteinander verbunden sind.

2. Zelle nach Anspruch 1, wobei das kationische Gruppen tragende Polymer ein Polymer oder Copolymer ist, das zur Kategorie der Polyoxyalkylene, Polyether, Polydioxolane, Polyoxetane oder Polycarbonate gehört.

3. Zelle nach einem der vorhergehenden Ansprüche, wobei das kationische Gruppen tragende Polymer ein Polymer ist, das zur Kategorie der Polyoxyalkylene gehört.

4. Zelle nach einem der vorhergehenden Ansprüche, wobei das kationische Gruppen tragende Polymer ein vernetztes Polymer ist, das zur Kategorie der Polyoxyalkylene gehört, die eine sich wiederholende Einheit umfassen, die der folgenden Formel (I) entspricht: 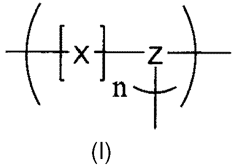 wobei:
- X einer Alkylenoxidgruppe entspricht;
- n der Anzahl der Wiederholungen der Alkylenoxidgruppe entspricht, wobei n von 2 bis 80 reichen kann;
- Z eine Alkylengruppe ist, die kovalent an eine Vernetzungseinheit gebunden ist.

5. Zelle nach einem der vorhergehenden Ansprüche, wobei das kationische Gruppen tragende Polymer ein vernetztes Polymer ist, das zur Kategorie der Polyoxyalkylene gehört, die eine sich wiederholende Einheit umfassen, die der folgenden Formel (II) entspricht

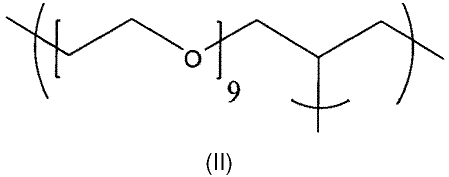

6. Zelle nach einem der vorhergehenden Ansprüche, wobei die kationischen Gruppen aus Ammoniumgruppen, Phosphoniumgruppen oder Sulfoniumgruppen ausgewählt sind.

7. Zelle nach einem der vorhergehenden Ansprüche, wobei, wenn die kationischen Gruppen zu einer Vernetzungseinheit gehören, die Vernetzungseinheit der folgenden Formel (III) entspricht: 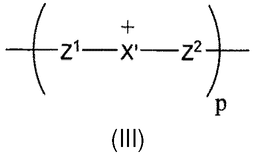 wobei
- Z¹ und Z² unabhängig voneinander eine Alkylengruppe darstellen;
- X'⁺ eine kationische Gruppe darstellt;
wobei Z¹ mit einem seiner Enden an eine sich wiederholende Einheit einer Polymerkette gebunden ist, während Z² mit einem seiner Enden an eine sich wiederholende Einheit einer anderen Polymerkette gebunden ist;
- p eine ganze Zahl größer oder gleich 1 ist.

8. Zelle nach Anspruch 8, wobei die Vernetzungseinheit der folgenden Formel (IV) entspricht 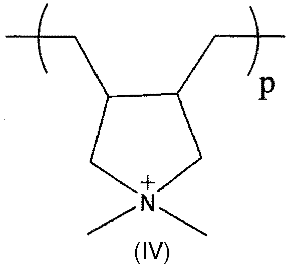 wobei p wie in Anspruch 8 definiert ist.

9. Zelle nach einem der vorhergehenden Ansprüche, wobei das kationische Gruppen tragende Polymer ein vernetztes, kationische Gruppen tragendes Polymer ist, das zur Kategorie der Polyoxyalkylene gehört, das der folgenden Formel (V) entspricht 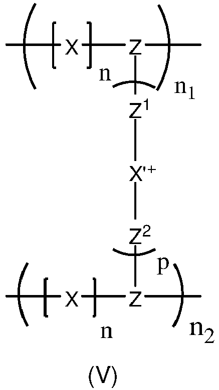 wobei:
- X, Z, Z¹, Z², X'⁺, n und p wie in den Ansprüchen 5 und 8 definiert sind;
- n₁ und n_{Z} der Anzahl der Wiederholungen der Einheit zwischen den Klammern entsprechen.

10. Zelle nach einem der vorhergehenden Ansprüche, wobei das kationische Gruppen tragende Polymer ein vernetztes, kationische Gruppen tragendes Polymer ist, das zur Kategorie der Polyoxyalkylene gehört, das der folgenden Formel (VI) entspricht: 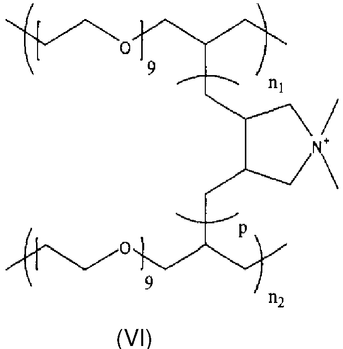 wobei n₁, n₂ und p wie in Anspruch 10 definiert sind.

11. Zelle nach einem der vorhergehenden Ansprüche, wobei die kationischen Gruppen durch Imididanionen neutralisiert sind.

12. Zelle nach einem der vorhergehenden Ansprüche, wobei das kationische Gruppen tragende Polymer in Form einer Schicht auf der Oberfläche mindestens einer der Seiten des Separators vorkommt.

13. Zelle nach einem der vorhergehenden Ansprüche, wobei der Elektrolyt ein flüssiger Elektrolyt ist, der mindestens ein organisches Lösungsmittel und mindestens ein *Lithiumsalz* umfasst.

14. Zelle nach einem der vorhergehenden Ansprüche, wobei die positive Elektrode ein schwefelhaltiges aktives Material umfasst.

15. Lithium-Schwefel-Batterie, die mindestens eine Zelle nach einem der vorhergehenden Ansprüche 1 bis 14 umfasst.

## Claims

1. A lithium-sulphur battery cell comprising a lithium metal negative electrode, a positive electrode and a separator impregnated with an electrolyte comprising a lithium salt, said separator being placed between the negative electrode and the positive electrode,
**characterised in that** the separator also comprises at least one polymer carrying cationic groups, such that the cationic groups are located in the crosslinking unit or units, and such that the polymer carrying cationic groups is a crosslinked polymer comprising at least two chains linked together by at least one crosslinking unit.

2. A cell according to claim 1, in which the polymer carrying cationic groups is a polymer or copolymer belonging to the category of polyoxyalkylenes, polyethers, polydioxolanes, polyoxetanes or polycarbonates.

3. A cell according to any one of the preceding claims, in which the polymer carrying cationic groups is a polymer belonging to the category of polyoxyalkylenes.

4. A cell according to any one of the preceding claims, in which the polymer carrying cationic groups is a crosslinked polymer belonging to the category of polyoxyalkylenes comprising at least one repeating unit corresponding to the following formula (I): 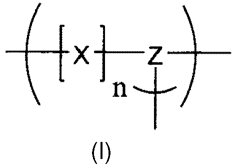 in which:
- X corresponds to an alkylene oxide group;
- n corresponds to the number of repeats of the alkylene oxide group, where n can be from 2 to 80;
- Z is an alkylene group covalently bonded to a crosslinking unit.

5. A cell according to any one of the preceding claims, in which the polymer carrying cationic groups is a crosslinked polymer belonging to the category of polyoxyalkylenes comprising at least one repeating unit corresponding to the following formula (II)

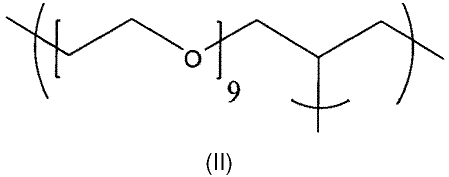

6. A cell according to any one of the preceding claims, in which the cationic groups are chosen from ammonium groups, phosphonium groups or sulphonium groups.

7. A cell according to any one of the preceding claims, in which, when the cationic groups belong to a crosslinking unit, the crosslinking unit corresponds to the following formula (III): 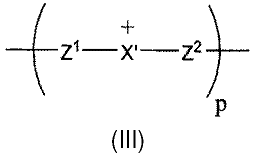 In which
- Z¹ and Z² represent, independently of each other, an alkylene group;
- X'⁺ represents a cationic group;
Z¹ being linked, by one of its ends, to a repeating unit of a polymeric chain, while Z² is linked, by one of its ends, to a repeating unit of another polymeric chain;
- p is an integer greater than or equal to 1.

8. A cell according to claim 8, in which the crosslinking unit corresponds to the following formula (IV) 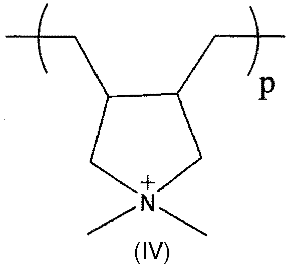 in which p is as defined in claim 8.

9. A cell according to any one of the preceding claims, in which the polymer bearing cationic groups is a crosslinked polymer bearing cationic groups belonging to the category of polyoxyalkylenes corresponding to the following formula (V) 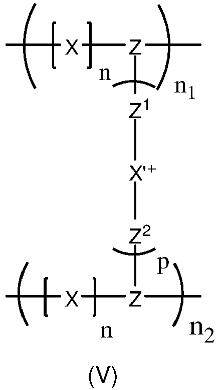 in which:
- X, Z, Z¹, Z², X'⁺, n and p are as defined in claims 5 and 8;
- n₁ and n_{Z} correspond to the number of repetitions of the pattern in brackets.

10. A cell according to any one of the preceding claims, in which the polymer bearing cationic groups is a crosslinked polymer bearing cationic groups belonging to the category of polyoxyalkylenes corresponding to the following formula (VI): 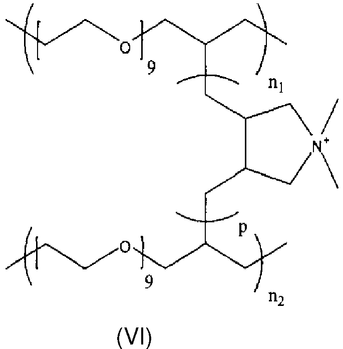 in which n₁, n₂ and p are as defined in claim 10.

11. A cell according to any one of the preceding claims, in which the cationic groups are neutralised by imide anions.

12. A cell according to any one of the preceding claims, in which the polymer carrying cationic groups is present in the form of a layer on the surface of at least one of the faces of the separator.

13. A cell according to any one of the preceding claims, wherein the electrolyte is a liquid electrolyte comprising at least one organic solvent and at least one *lithium* salt.

14. A cell according to any one of the preceding claims, wherein the positive electrode comprises a sulphur-containing active material.

15. A lithium-sulphur battery comprising at least one cell as defined according to any one of the preceding claims 1 to 14.
